# EUROPEAN PATENT APPLICATION

(11) **EP 3 244 342 A1**
(43) Date of publication of application: **15.11.2017**
(21) Application number: 16169405.4
(22) Date of filing: 12.05.2016
(51) Int. Cl.: G06K 9/00, G06K 9/20

(54) **BIOMETRIC VERIFICATION DEVICE AND METHOD**

(71) Applicant: NXP B.V., 5656 AG Eindhoven (NL)
(72) Inventor: SUWALD, Thomas, 5656 AG Eindhoven (NL)
(74) Representative: Krott, Michel

(57) **Abstract**

According to a first aspect of the present disclosure, a biometric verification device is provided, comprising: a measurement unit configured to measure a biometric parameter; a transducer configured to convert the biometric parameter into an electrical measurement signal; a linearization unit configured to linearize non-linearities associated with conversions performed by the transducer; wherein said linearization unit is further configured to linearize said non-linearities in dependence on a tunable corrective function. Furthermore, a corresponding biometric verification method and a corresponding computer program product are disclosed.

## Description

### FIELD

The present disclosure relates to a biometric verification device. Furthermore, the present disclosure relates to a corresponding biometric verification method and to a corresponding computer program product.

### BACKGROUND

Today, many electronic devices and systems require a form of user authentication. For example, in a payment system, a smart card may be used to initiate a payment and to authenticate a user. In addition to conventional user authentication via a personal identification number (PIN), a smart card may also include a fingerprint sensor for capturing the user's fingerprint. In that case, the captured fingerprint may be used to ascertain that the smart card is presented to a terminal by its rightful owner, for example. Generally speaking, biometric verification devices are increasingly important. Nonlimiting examples of biometrics are: fingerprints, hand-vein patterns, heart-beat patterns, iris patterns, retina patterns, odour patterns, voice patterns, and skin property patterns.

### SUMMARY

According to a first aspect of the present disclosure, a biometric verification device is provided, comprising: a measurement unit configured to measure a biometric parameter; a transducer configured to convert the biometric parameter into an electrical measurement signal; a linearization unit configured to linearize non-linearities associated with conversions performed by the transducer; wherein said linearization unit is further configured to linearize said non-linearities in dependence on a tunable corrective function.

In one or more embodiments, said corrective function is configured to correct an output of the linearization unit for non-linearities introduced by a biometric reference device.

In one or more embodiments, the corrective function is tunable by iteratively reducing a deviation between a reference signal and a linearized measurement signal, wherein said reference signal is a stored reference signal generated by said biometric reference device.

In one or more embodiments, the corrective function is tunable in an enrolment state of the biometric verification device.

In one or more embodiments, the corrective function is implemented in a programmable analog-to-digital converter.

In one or more embodiments, the corrective function comprises a set of linear coefficients which represent reference levels of the programmable analog-to-digital converter.

In one or more embodiments, the biometric verification device further comprises a feature extraction unit configured to extract biometric features from linearized measurement signals and a matching unit configured to compare extracted biometric features with biometric reference data.

In one or more embodiments, the matching unit is configured to generate a matching score based on a result of said comparison.

In one or more embodiments, the biometric verification device further comprises a signal processing unit configured to perform signal processing functions on linearized measurement signals.

In one or more embodiments, the corrective function represents a physical unclonable function.

In one or more embodiments, the biometric verification device is a fingerprint verification device.

In one or more embodiments, a smart card comprises a biometric verification device of the kind set forth.

In one or more embodiments, a system comprises a biometric verification device of the kind set forth and a biometric reference device.

According to a second aspect of the present disclosure, a biometric verification method is conceived , wherein: a measurement unit of a biometric verification device measures a biometric parameter; a transducer of said biometric verification device converts the biometric parameter into an electrical measurement signal; a linearization unit of said biometric verification device linearizes non-linearities associated with conversions performed by the transducer; wherein said linearization unit further linearizes said non-linearities in dependence on a tunable corrective function.

According to a second aspect of the present disclosure, a computer program product is provided, comprising non-transient instructions which, when executed by a processing unit, cause said processing unit to carry out or control a method of the kind set forth.

### DESCRIPTION OF DRAWINGS

Embodiments will be described in more detail with reference to the appended drawings, in which:
Fig. 1 shows an example of a measurement device;
Figs. 2A and 2B show an example of sampling a measurement signal;
Fig. 3 shows an example of transforming a measurement signal into a discrete processed signal;
Fig. 4 shows an illustrative embodiment of a biometric verification device;
Fig. 5 shows an example of transforming a measurement parameter into a discrete processed signal;
Fig. 6 shows an example of biometric verification using different transducers and signal paths;
Fig. 7 shows an illustrative embodiment of a tunable corrective function implementation;
Fig. 8 shows an illustrative embodiment of a biometric verification device in an enrolment state;
Fig. 9 shows an illustrative embodiment of a biometric verification device in a verification state.

### DESCRIPTION OF EMBODIMENTS

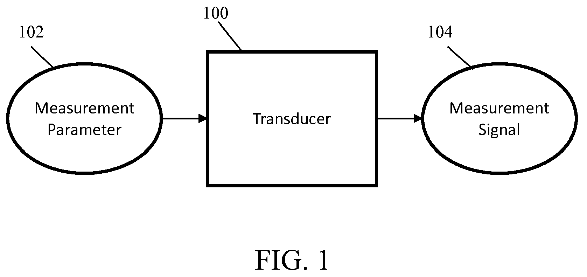

**Fig. 1** shows an example of a measurement device. The measurement device comprises a transducer 100 which is configured to receive a measurement parameter 102 (e.g., a biometric parameter) and to convert said measurement parameter into an electrical measurement signal 104. In signal acquisition and processing systems measured physical properties are often made available to an electronic system by means of a transducer that converts a measured property (i.e., a measurement parameter) into an electrical measurement signal that may be processed by an electronic signal processing system. Furthermore, a measured property is often processed at a location or time which is different from the location and time of capturing said property. This may involve passing an electric representation of a measured property in suitable format through a signal path, wherein the signal path may also include means to store said representation for some time before it is further processed.

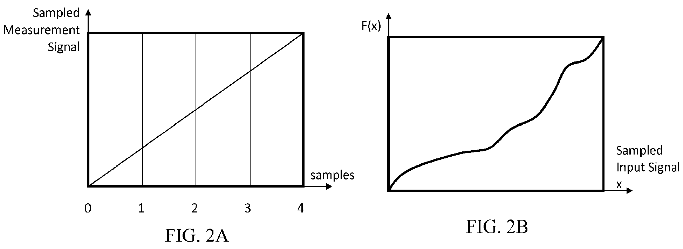

**Figs. 2A and 2B** show an example of sampling a measurement signal. Transforming a measured property into an electrical representation often comprises taking samples of a transduced property and converting these samples in a suitable way into an electrical representation, yielding a sampled measurement signal. In reality a signal path may exhibit an arbitrary transfer function applied on a sampled measurement signal. The transfer function F(x) of such a signal path may exhibit a linear or non-linear characteristic. In particular, for processing of a measured property by an electronic system there may be a need to transform the measured property into an electrical measurement signal which is output in discrete representation. The implementation of such a transformation process may require a signal path which exhibits a non-linear characteristic.

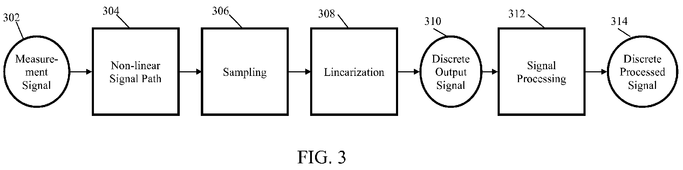

**Fig. 3** shows an example of transforming a measurement signal into a discrete processed signal. A transducer may be configured to transform a measurement parameter into an electrical representation, yielding an electrical measurement signal 302. The measurement signal 302 may be passed through a non-linear signal path 304 to a sampler. The sampler is configured to sample 306 the measurement signal 302. Furthermore, in order to remove non-linearities from the sampled measurement signal, a linearization function 308 may be performed on said sampled measurement signal, yielding a discrete output signal 310. Optionally, further signal processing functions 312 may be performed on the discrete output signal 310, yielding a discrete processed signal 314.

In an example, a two-dimensional topology of a fingerprint may be transduced into a fingerprint image utilizing a topology-to-capacitance transducer in combination with a subsequent capacitance-to-voltage converter. The topology of the fingerprint may be characterized by the valley-depth z between so-called ridges. The topology-to-capacitance converter is characterized by the fact that the capacitance decreases nonlinearly if the valley depth increases linearly. In certain application environments a reference fingerprint sample may be captured by a first transducer while a second sample may be captured by a second transducer at a different location and different time with the purpose to verify that both fingerprint samples originate from the same person. Utilizing different transducers for taking a reference sample and a verification sample may also introduce different characteristics of the non-linear signal paths associated with said transducers. These differences may negatively impact the matching score which is indicative of the extent to which there is a match between a reference fingerprint sample taken by the first transducer and a verification fingerprint sample taken by the second transducer. Thus, although the reliability of a verification outcome may be sufficient in case of a linearization of a sampled measurement signal provided by a single transducer and associated sampler, the reliability of the verification outcome may decrease in case different transducers/samplers are used for capturing reference biometrics on the one hand and verification biometrics on the other hand.

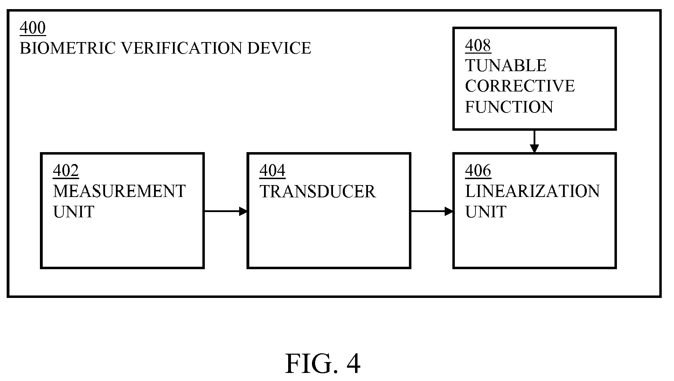

**Fig. 4** shows an illustrative embodiment of a biometric verification device 400. The biometric verification device 400 comprises a measurement unit 402 operatively coupled to a transducer 404. Furthermore, the biometric verification device 400 comprises a linearization unit 406 operatively coupled to the transducer 404. The measurement unit 402 is configured to measure a biometric parameter. The transducer 404 is configured to convert the biometric parameter into an electrical measurement signal. This may for example include, or be followed by, a sampling step as described above. The linearization unit 406 is configured to linearize non-linearities associated with conversions performed by the transducer 404. For instance, these non-linearities may be exhibited by a signal path within a transducer and/or between a transducer and a sampler (not shown). Furthermore, the linearization unit 406 is configured to linearize said non-linearities in dependence on a tunable corrective function 408. Thus, the linearization may be performed more flexibly in the sense that factors different from said non-linearities may be taken into account as well. This, in turn, may result in an increased reliability of a verification outcome.

In one or more embodiments, said corrective function may be configured to correct an output of the linearization unit for non-linearities introduced by a biometric reference device. As explained above, if a different device is used for capturing reference biometrics (i.e., different from the biometric verification device 400), then the non-linearities in signal paths within an external biometric reference device are not taken into account by the linearization unit 406 of the biometric verification device 400. By means of the tunable corrective function the linearization performed by the biometric verification device 400 may take into account these external non-linearities as well. This may again result in an increased reliability of a verification outcome. In a practical example, the biometric reference device may a high-end fingerprint sensor installed in a secure environment, which may be used to capture many fingerprint images, with the aim to create a central fingerprint database. In contrast, the biometric verification device may be a low-cost smart card equipped with a simpler fingerprint sensor. In this case, fingerprint images stored in the central fingerprint database may be copied to the low-cost smart card and serve as a reference image, against which fingerprint images captured by the fingerprint sensor of the smart card are verified. Then, the corrective function may correct the output of the linearization unit of the card's fingerprint sensor for non-linearities introduced by the high-end fingerprint sensor.

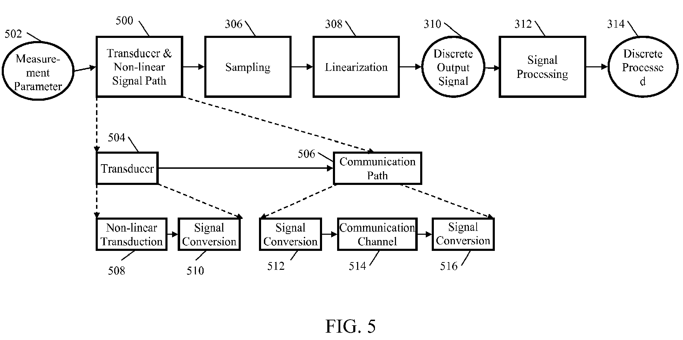

**Fig. 5** shows an example of transforming a measurement parameter into a discrete processed signal. In this example, a transducer 500 takes a measurement parameter 502 as input and produces an input signal to a sampling function 306. Then, a linearization function 308 is applied on the output of the sampling function 306. The linearization function 308 yields a discrete output signal 310, on which one or more signal processing functions 312 may be applied, which result in a discrete processed signal 314. In this case, the transducer 500 includes a non-linear signal path, which breaks down into a transducer portion 504 and a communication path portion 506. The transducer portion 504 of the non-linear signal path includes a non-linear transduction portion 508 and a signal conversion portion 510. The communication path portion 506 of the non-linear signal path includes signal conversion portion 512, a communication channel portion 514, and another signal conversion portion 516. The communication path 506 may for example represent the communication channel between the transducer 500 and the sampler configured to perform the sampling function 306. It will be appreciated that this is only an example of a non-linear signal path associated with conversions performed by a transducer, and that in some embodiments non-linearities in the sampling process 306 may be taken into account as well. Thus, a part of the signal path may be a non-linear signal transducer comprising non-linear transduction and signal conversion into an electrical representation. Another part of the signal path involves the communication path comprising signal conversion into a representation that may be sent through a communication channel and another signal conversion that may re-establish the signal at the output of the communication channel. Consecutive processing steps in the signal path may comprise sampling and linearization, yielding a linearized discrete output signal that may be processed by applying suitable signal processing functions in order to obtain a discrete processed signal.

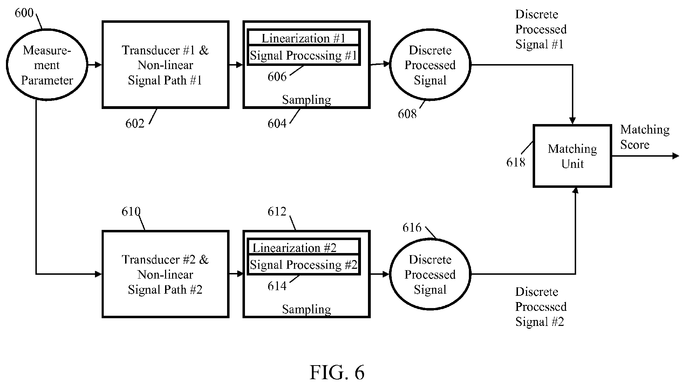

**Fig. 6** shows an example of biometric verification using different transducers and signal paths. In this example, one measurement parameter 600 is measured by two transducers 602, 610. A first transducer 602 may be included in a biometric reference device. A second transducer 610 may be included in a biometric verification device. Both transducers 602, 610 may include non-linear signal paths as described with reference to Fig. 5. Furthermore, sampling functions 604, 612 may be applied to the output signals of the transducers 602, 610. Furthermore, linearization functions and signal processing functions 604, 614 may be applied to the sampled transducer signals, which yields two discrete processed signals 608, 616. The discrete processed signals 608, 616 may be compared by a matching unit 618, yielding a matching score which is indicative of the extent to which discrete processed signals 608, 616. If the matching score exceeds a predefined threshold, it may be concluded that the captured biometric is authentic.

The setup shown in Fig. 6 usually works well if the biometric reference device is the same as the biometric verification device. However, when these devices differ, the linearization function 614 that linearizes the sampled signal of the second transducer 610 cannot account for the non-linearities associated with the first transducer 602. Therefore, in accordance with the present disclosure, the linearization function 614 that linearizes the sampled signal of the second transducer 610 is dependent on a tunable corrective function that may take said on-linearities associated with the first transducer 602 into account.

In this example, the linearization functions and signal processing functions 606, 614 have been shown as integrated into the sampling functions 604, 612. Combining sampling and implementation of the linearization into a single sampling step may provide an efficient implementation approach. Integrating the signal processing function into the sampling step may further increase efficiency. In order to achieve best possible approximation of a reference transducer and a verification transducer it may be required to combine further signal processing functions with the linearization. For the verification signal path this may be achieved by combining the further signal processing functions as far as possible with the corrective function used by the linearization function. In some embodiments, such further signal processing functions may be, for example, linear or non-linear scaling, contrast enhancement and black-stretch.

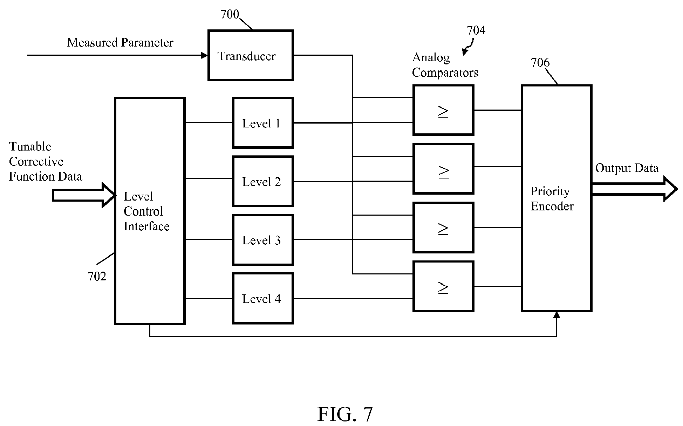

**Fig. 7** shows an illustrative embodiment of a tunable corrective function implementation. In this embodiment, the corrective function is implemented in a programmable analog-to-digital converter. This may result in a practical and efficient implementation of the corrective function. The output signal of the transducer may be fed to a set of analog comparators 704. A level control interface 702 may take tunable corrective function data as input and control the analog comparators 704 and a priority encoder 706 by means of a table. For example, the corrective function data may in some embodiments be provided in the format of a conversion characteristic that may assign a digital output value to a related reference level:
- Reference Level = 0.1V, Output value = 1
- Reference Level = 0.2V, Output value = 2
- Reference Level = 0.4V, Output value = 3
- Reference Level = 0.8V, Output value = 4

The resolution of the involved comparators may be chosen such that best approximation of the desired corrective function may be achieved. Regardless of the number of reference levels being applied the bit-length (resolution) of the output values may be freely chosen as indicated below, wherein the bit-length has now be extended to 3-bit:
- Reference Level = 0.1V, Output value = 1 (001)
- Reference Level = 0.2V, Output value = 2 (010)
- Reference Level = 0.4V, Output value = 4 (100)
- Reference Level = 0.8V, Output value = 7 (111)

In this example the combinations of reference level definitions and output values are provided to the level control interface 702. The reference level information may be separated and provided to a digital-to-analog converter (not shown) that may generate a corresponding reference voltage level to be provided to a comparator. The desired output level may be separated as well and provided to the priority encoder 706 in order to define the output value that may be provided when the transduced measurement parameter is equal to or larger than the associated reference voltage level. The priority encoder 706 may be configured in such a way that an input voltage range between a first reference level and a second reference level may provide the output value associated with the first reference level. Thus, the level control interface 702 may control the priority encoder 706, which takes the output of the analog comparators 704 as input and which produces output data provided by the level control interface 702. In a practical and efficient implementation, the corrective function may comprise a set of linear coefficients which represent the reference levels of the programmable analog-to-digital converter.

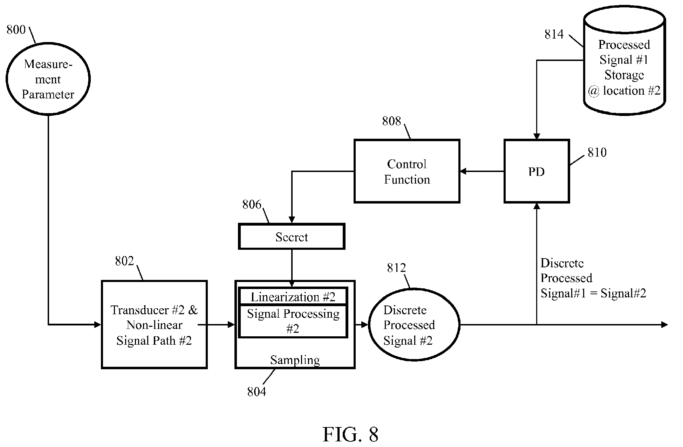

**Fig. 8** shows an illustrative embodiment of a biometric verification device in an enrolment state. As mentioned above, in one or more embodiments, the corrective function is tunable in an enrolment state of the biometric verification device. Thereby, tuning the corrective function may be facilitated. Furthermore, in one or more embodiments, the corrective function is tunable by iteratively reducing a deviation between a reference signal and a linearized measurement signal, wherein said reference signal is a reference signal generated by a biometric reference device and stored in the biometric verification device. This may result in an efficient process for tuning the corrective function.

In the example shown in Fig. 8, the iterative reduction of said deviation is realized in a control loop comprising a control function 808, a secret 806 (i.e., the corrective function to be tuned), a sampling step 804 including linearization and one or more signal processing functions, and discriminating function 810. The discriminating function 810 takes as input a reference signal received or retrieved from a storage unit 814 of the biometric verification device. As mentioned before, the reference signal may have been generated by a biometric reference device different from the biometric verification device, and thus exhibiting different non-linearities. Furthermore, the discriminating function 810 takes as input a discrete processed signal 812 output by the sampling step 804, and originating from a transducer 802 of the biometric verification device, which takes a measurement parameter 800 as input.
Thus, before the biometric verification device is used for the first time it may be prepared for best matching performance by creating and installing the tunable corrective function. For that purpose a control loop may be established that may apply the stored discrete processed signal #1 taken from the storage unit 814 as a reference signal and compare it in a discriminating function PD 810 against a discrete processed signal #2 812 obtained by capturing a biometric parameter (i.e., a measurement parameter 800) by transducer #2 802 while applying linearization #2 and signal processing #2 in a sampling step 804. A control loop function 808 applied to the output of the discriminator function PD 810 which may generate a secret corrective function that, when applied to the output signal of transducer #2 802, yields a discrete processed signal #2 812 that may contain features #2 having a best achievable compliance with a stored feature set #1. Note that this feature set #1 may also be stored in the stored in the storage unit 814; the feature extraction function (not shown) applied to extract features from both processed signals #1 and #2 may be the same.

When this control loop may have settled within an acceptable error margin the corrective function may be stored as a secret 806, which may finalize the preparation for later use. The discriminating function PD 810 as well as the control loop function 808 may be implemented as a computer program that may run on a separate processing unit as long as the security of the processed signal #1 and the secret 806 may be maintained at a desired or prescribed level. In some embodiments the control loop function 808 may be implemented as a biometric computer program that evaluates the level of matching between extracted features #1 (i.e. biometric features extracted from processed signal #1) and extracted features #2 (i.e. biometric features extracted from processed signal #2), processes the level of matching and changes the corrective function in such a way that the level of matching increases. This may be done in an iterative process in as many steps as required to achieve an acceptable level of matching. In some embodiments said biometric computer program may be executed by an embedded secure element.

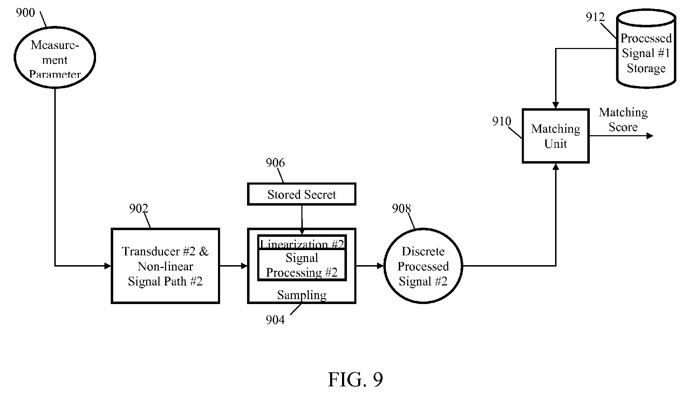

**Fig. 9** shows an illustrative embodiment of a biometric verification device in a verification state. After the corrective function may have been created and tuned in an enrolment state of the biometric verification device, as described with reference to Fig. 8, the biometric verification device may deploy said corrective function in an operational state (i.e., in a verification state). The biometric verification device may be embedded in a user device, such as a smart card, and a user may have to authenticate himself to the user device through the biometric verification device, for example. The biometric verification device comprises transducer #2 902 including a non-linear signal path, a sampling unit 904 including a linearization unit and one or more signal processing functions, a stored secret 906 (i.e., the corrective function) and a matching unit 910. In operation, the linearization unit linearizes the non-linearized output of the transducer 902 in dependence on the stored secret 906, which yields a discrete processed signal #2 908. Furthermore, the matching unit 910 compares the discrete processed signal #2 908 with processed signal #1 stored in a storage unit 912 of the biometric verification device. The matching unit 910 outputs a matching score; if said matching score exceeds a predefined threshold, it may be concluded that the captured biometric is authentic, for example. In one or more embodiments, the biometric verification device comprises a feature extraction unit (not shown) configured to extract biometric features from the discrete processed signal #2 908. Then, the matching unit 910 may be configured to compare extracted biometric features with biometric reference data which also contain extracted features, in particular biometric features extracted from the stored processed signal #1. In this way, the matching process may be facilitated.

Thus, in the verification state the corrective function (i.e., the stored secret 906) is effectively applied to signal path #2. A subsequent feature extraction function #2 may obtain a set of features that may be compared with extracted features #1 being securely stored. The matching unit 910 may now provide an output indicating the matching score, which may be indicative of the probability that the fingerprint being captured by transducer #2 is identical to the fingerprint previously captured by transducer #1. In some embodiments storing the secret, retrieving the secret, feature extraction #2 and matching may be executed in a secure environment within an embedded secure element (not shown).

In some embodiments the secret may be a group of linear coefficients. These linear coefficients may represent reference levels of a flash analog-to-digital converter (ADC). Assigning these reference levels may configure a flash ADC to provide an output value which is indicative of an input value being processed by the applied corrective function. This approach may achieve proper sampling of the input signal without knowing the non-linear transfer function or its individual components, yielding a high matching score sufficient to indicate a match. Without applying the correct corrective function the matching result may be "no match". Thus the corrective function may act as a device-specific physical unclonable function (PUF) that is required in addition to an authentic fingerprint in order to achieve a match. Achieving a match may now require a token comprising transducer #2, a securely stored secret representing the corrective function and an authentic fingerprint provided to transducer #2. In this way, the security level may be further increased.

In some embodiments the matching score may be forwarded to a payment application executed by a controller of a smart card or a wearable device, in order to make a payment transaction dependent on a positive verification, for example by comparing the matching score with a predefined threshold and concluding that the verification has a positive outcome if the matching score exceeds said threshold. In some embodiments the matching score may be forwarded to a governmental application in order to make a person's verification dependent on a positive verification, again using said matching score. In some embodiments the matching score may be forwarded to an automotive application being executed by a vehicle's computer in order to make access of a person to that vehicle dependent on a positive verification, again using said matching score. In some embodiments the verified biometric is at least one of a fingerprint, hand-vein pattern, heart-beat pattern, iris pattern, retina pattern, odour pattern, voice pattern, and skin property pattern.

The systems and methods described herein may at least partly be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: transducer
- 102: measurement parameter
- 104: measurement signal
- 302: measurement parameter
- 304: non-linear signal path
- 306: sampling
- 308: linearization
- 310: discrete output signal
- 312: signal processing
- 314: discrete processed signal
- 400: biometric verification device
- 402: measurement unit
- 404: transducer
- 406: linearization unit
- 408: tunable corrective function
- 500: transducer and non-linear signal path
- 502: measurement parameter
- 504: transducer
- 506: communication path
- 508: non-linear transduction
- 510: signal conversion
- 512: signal conversion
- 514: communication channel
- 516: signal conversion
- 600: measurement parameter
- 602: first transducer and first non-linear signal path
- 604: sampling
- 606: first linearization and first signal processing
- 608: first discrete processed signal
- 610: second transducer and second non-linear signal path
- 612: sampling
- 614: second linearization and second signal processing
- 616: second discrete processed signal
- 618: matching unit
- 700: transducer
- 702: level control interface
- 704: analog comparators
- 706: priority encoder
- 800: measurement parameter
- 802: second transducer and second non-linear signal path
- 804: sampling
- 806: secret
- 808: control function
- 810: discriminating function
- 812: second discrete processed signal
- 814: first discrete processed signal stored at second location
- 900: measurement parameter
- 902: second transducer and second non-linear signal path
- 904: sampling
- 906: stored secret
- 908: second processed signal
- 910: matching unit

## Claims

1. A biometric verification device, comprising:
a measurement unit configured to measure a biometric parameter;
a transducer configured to convert the biometric parameter into an electrical measurement signal;
a linearization unit configured to linearize non-linearities associated with conversions performed by the transducer;
wherein said linearization unit is further configured to linearize said non-linearities in dependence on a tunable corrective function.

2. A biometric verification device as claimed in claim 1, wherein said corrective function is configured to correct an output of the linearization unit for non-linearities introduced by a biometric reference device.

3. A biometric verification device as claimed in claim 2, wherein the corrective function is tunable by iteratively reducing a deviation between a reference signal and a linearized measurement signal, wherein said reference signal is a stored reference signal generated by said biometric reference device.

4. A biometric verification device as claimed in any preceding claim, wherein the corrective function is tunable in an enrolment state of the biometric verification device.

5. A biometric verification device as claimed in any preceding claim, wherein the corrective function is implemented in a programmable analog-to-digital converter.

6. A biometric verification device as claimed in claim 5, wherein the corrective function comprises a set of linear coefficients which represent reference levels of the programmable analog-to-digital converter.

7. A biometric verification device as claimed in any preceding claim, further comprising a feature extraction unit configured to extract biometric features from linearized measurement signals and a matching unit configured to compare extracted biometric features with biometric reference data.

8. A biometric verification device as claimed in claim 7, wherein the matching unit is configured to generate a matching score based on a result of said comparison.

9. A biometric verification device as claimed in any preceding claim, further comprising a signal processing unit configured to perform signal processing functions on linearized measurement signals.

10. A biometric verification device as claimed in any preceding claim, wherein the corrective function represents a physical unclonable function.

11. A biometric verification device as claimed in any preceding claim, being a fingerprint verification device.

12. A smart card comprising a biometric verification device as claimed in any preceding claim.

13. A system comprising a biometric verification device as claimed in any one of claims 1 to 11 and a biometric reference device.

14. A biometric verification method, wherein:
a measurement unit of a biometric verification device measures a biometric parameter;
a transducer of said biometric verification device converts the biometric parameter into an electrical measurement signal;
a linearization unit of said biometric verification device linearizes non-linearities associated with conversions performed by the transducer;
wherein said linearization unit further linearizes said non-linearities in dependence on a tunable corrective function.

15. A computer program product comprising non-transient instructions which, when executed by a processing unit, cause said processing unit to carry out or control a method as claimed in claim 14.
